# EUROPEAN PATENT APPLICATION

(11) **EP 3 410 523 A1**
(43) Date of publication of application: **05.12.2018**
(21) Application number: 17744406.4
(22) Date of filing: 27.01.2017
(51) Int. Cl.: H01M 8/0202, C23C 26/00, H01B 5/02, H01M 8/24, H01M 8/12

(54) **ELECTROCONDUCTIVE MEMBER, CELL STACK, MODULE, AND MODULE STORAGE DEVICE**

(30) Priority: 28.01.2016 JP 2016014543
(71) Applicant: Kyocera Corporation, Kyoto-shi Kyoto 612-8501 (JP)
(72) Inventor: KOZAI,Takeshi, Kyoto-shi Kyoto 612-8501 (JP)
(74) Representative: Viering, Jentschura & Partner mbB Patent- und Rechtsanwälte
(86) International application number: PCT/JP2017/002985
(87) International publication number: WO 2017/131176

(57) **Abstract**

A disclosed electroconductive member includes a substrate and a cover layer covering the entire surfaces of the substrate and containing zinc, manganese, and cobalt. The cover layer has a zirconium content of 5000 ppm or less on an oxide basis. A disclosed cell stack includes a plurality of SOFCs that are electrically connected with the electroconductive member. A disclosed cell module includes the cell stack accommodated in a container. A disclosed cell module storage device includes the cell module and an accessories to operate the cell module that are accommodated in the exterior case.

## Description

### Technical Field

The present disclosure relates to an electroconductive member, a cell stack, a cell module, and a cell module storage device.

### Background Art

Solid oxide fuel cells (SOFCs) are known as energy sources for the next generation. The SOFC generates electricity with a fuel gas, such as hydrogen-containing gas, and oxygen-containing gas, such as air, at a high temperature of 600°C to 1000°C. Cell stacks are also known each including a plurality of SOFCs that are connected in series with electroconductive members.

Electroconductive member and manifolds and relevant components for supply of reactive gas, such as fuel gas, to SOFCs are usually composed of alloys containing, for example, 10 to 30 mass% chromium, which alloys have high machinability and thermal resistance.

During long-term generation of electric power using SOFCs connected in series and electroconductive members of chromium-containing alloy disposed between SOFCs, chromium contained in the electroconductive members is diffused into air electrodes or cathodes and interfaces between air electrodes and solid electrolyte layers. This phenomenon may lead to an increase in electric resistance and thus a decrease in power generation capability of cell stacks, which is called chromium poisoning.

In order to reduce chromium poisoning, Patent Literature 1 discloses a heat resistant chromium-containing alloy the surface of which is covered with the oxide coating of a metal, such as zinc, manganese, iron, cobalt, or nickel.

### Citation List

### Patent Literature

PTL 1: WO2010/087298

### Summary of Invention

The disclosed electroconductive member includes a substrate and a cover layer that covers the entire surfaces of the substrate and contains zinc, manganese, and cobalt. The cover layer has a zirconium content of 5000 ppm or less on an oxide basis.

### Brief Description of Drawings

Figure 1 is an isomeric view of an electroconductive member for a fuel cell.
Figure 2A is a side view as seen from the direction A of the electroconductive member shown in Figure 1; and Figure 2B is a partially omitted cross-sectional view taken from line B-B in Figure 1 of the electroconductive member.
Figure 3A is a side view of a cell stack; and Figure 3B is an enlarged partial view of Figure 3A.
Figure 4A is an exploded isometric view of a cell module including a container and a cell stack.
Figure 5 is an isometric view of a cell module storage device including an exterior case containing the cell module shown in Figure 4.

### Embodiments

### (Electroconductive member)

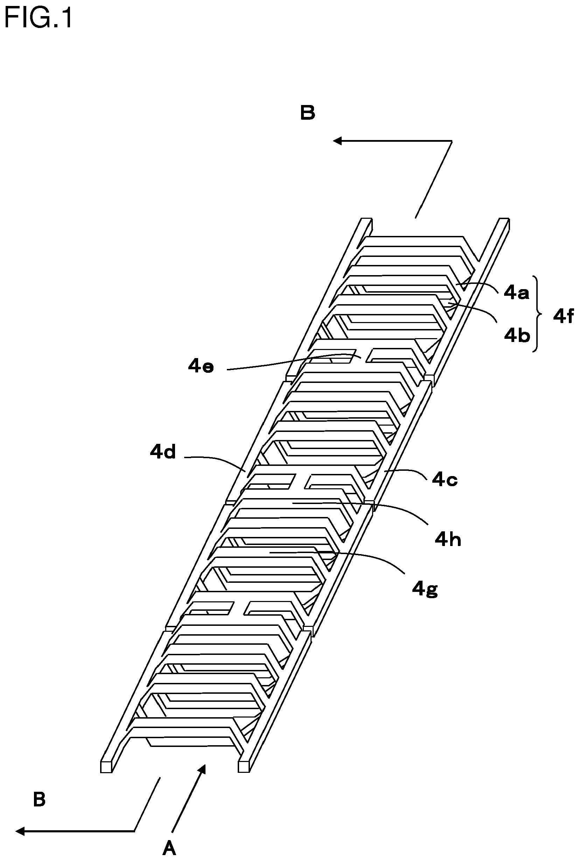

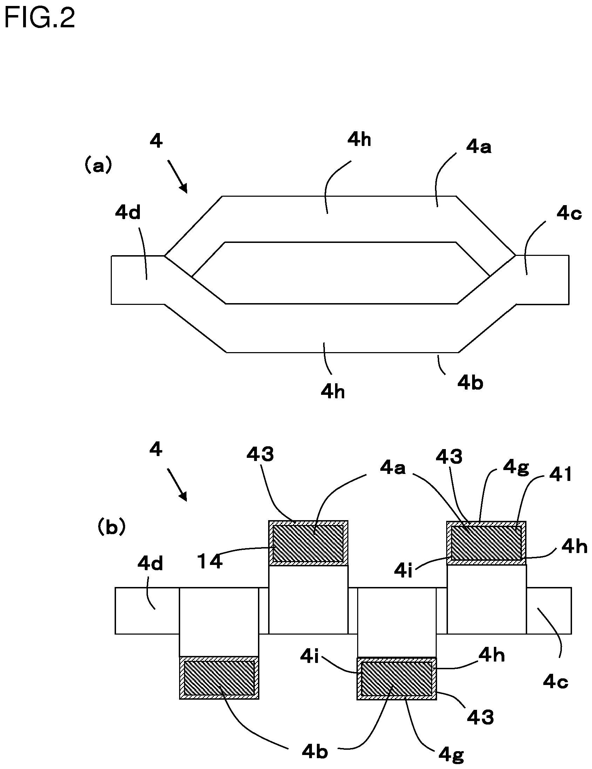

The disclosed electroconductive member for fuel cells will now be described with reference to Figures 1, 2A, and 2B.

The electroconductive member 4 shown in Figure 1 includes a plurality of units. Each unit includes a first collector piece 4a, a second collector piece 4b, a first connection 4c, and a second connection 4d. The first collector piece 4a is connected to one of the two adjacent SOFCs (not depicted in Figures 1, 2A, and 2B). The second collector piece 4b are connected to the other SOFC. The first connection 4c is joined to one end of the first collector piece 4a and one end of the second collector piece 4b. The second connection 4d is joined to the other end of the first collector piece 4a and the other end of the second collector piece 4b. These units are coupled with conductive coupling pieces 4e in the longitudinal direction of the SOFCs into a substrate. The first collector piece 4a and second collector piece 4b indicate sites to be connected to SOFCs and functions as a collector 4f that collects current from the SOFCs.

With reference to Figures 2A and 2B, the first collector piece 4a and second collector piece 4b have first faces 4g intersecting each other at different angles in the direction of the arrayed SOFCs (vertical direction in Figures 2A and 2B) and second faces 4h and third faces 4i in parallel with the direction of the arrayed SOFC. In other words, the first collector piece 4a and second collector piece 4b each have a first face 4g facing the SOFC, and a second face 4h and a third face 4i lying next to each other on the two sides of the first face 4g.

The solid oxide fuel cell system includes, for example, a cell module including a container accommodating a cell stack of SOFCs. In the cell module, the fuel electrode is supplied with fuel gas (hydrogen-containing gas) while the air electrode is supplied with air (oxygen-containing gas) in each SOFC to generate electricity at a high temperature of 600°C to 1000°C. Thus, the manifolds for supplying reactive gas such as fuel gas to electroconductive members 4 and SOFCs are composed of chromium containing alloys that have thermal resistance and are cost competitive.

In view of such a condition, the substrate 41 may be made of, for example, a chromium-containing alloy. Since the electroconductive member 4 is exposed to high-temperature oxidizing atmosphere, the substrate 41 may be formed of an alloy containing 4 to 30 mass% chromium. The substrate 41 may be formed of an iron-chromium alloy or a nickel-chromium alloy. The substrate 41 is made of a conductive material for use at high temperatures (600°C to 1000°C).

The electroconductive member 4 is provided with a cover layer 43 that covers the entire surfaces of the substrate 41. The cover layer 43 blocks diffusion of chromium contained in the electroconductive member 4 into the air electrode layer and the interface between the air electrode layer and the solid electrolyte layer of the SOFC and thus prevents an increase in electric resistance. Figures 1 and 2A do not illustrate the cover layer 43. Figure 2B illustrates the cover layer 43 provided on the entire surfaces of the substrate 41 without hatching in the cross-section of the substrate 41.

The cover layer 43 may be formed by dip coating, electrodeposition coating, plating, sputtering, or spray coating.

In detail, the material of the cover layer 43 is composed of zinc, manganese, and cobalt, more specifically Zn(CoₓMn_{1 - x})₂O₄ (0<x<1). Such a composition can reduce diffusion of chromium, increase the conductivity of the electroconductive member 4, and reduce the difference in thermal expansion coefficient between the substrate 41 and air electrode layer.

The present disclosing persons have extensively sought the reason for an increase in electric resistance in the electroconductive member 4 provided with the cover layer 43, and have discovered that a high zirconium content in the cover layer 43 affects the increase in the electric resistance of the electroconductive member 4. It is inferred that zirconium is dissolved in Zn(CoₓMn_{1 - x})₂O₄ (0<x<1) in the cover layer 43 to reduce the conductivity of the cover layer 43.

In this embodiment, the zirconium content in the cover layer 43 of the electroconductive member is controlled to 5000 ppm or less on an oxide basis to reduce the electric resistance of the electroconductive member 4 provided with the cover layer 43. The cell stack can thereby maintain high power generation capacity for long time.

In some embodiments, the zirconium content in the cover layer 43 of the electroconductive member is controlled to 500 ppm or less on an oxide basis to further reduce the electric resistance of the electroconductive member 4 provided with the cover layer 43. The cell stack can thereby maintain further enhanced power generation capacity for long time.

In the semiquantitative mapping of zirconium with an EPMA, the cover layer has areas having a sensitivity of at least 1.25 counts occupying 0.25% or more of a 120-µm² observed region selected at random. This expression indicates that zirconium is partially localized in the matrix.

In comparison with, for example, an electroconductive member provided with a cover layer containing substantially the same amount of zirconium, zirconium is partially localized or concentrated in limited regions and thus the content of zirconium dissolved in Zn(CoₓMn_{1 - x})₂O₄ can be reduced. It is inferred that such localization further reduces the electric resistance of the electroconductive member 4 provided with the cover layer 43.

Zirconium in the cover layer 43 may be originally present in the material itself for the cover layer 43 or may invade the material for the cover layer 43 during the manufacturing process of the cover layer 43. A possible factor of invasion of zirconium during the manufacturing process is use of zirconia balls in the bead mill dispersion of raw material powder.

The zirconium content in the cover layer 43 can be reduced by selection of raw material containing a low content of zirconium and/or by suppression of invasion of zirconium during bead mill dispersion of raw material. The suppression of invasion of zirconium during the bead mill dispersion can be achieved through control of the dispersion time and dispersion rate in the bead mill. The bead mill dispersion may be carried out with balls other than zirconia balls.

The zirconium content can be determined through quantitative analysis of a sample shaved off from the cover layer 43 of the electroconductive member 4 with an ICP emission spectrophotometer (ICPS-8100 made by Shimadzu Corporation).

The electroconductive member 4 may have any shape, in addition to those shown in Figures 1, 2A and 2B. Examples of other shapes include cylindrical, mesh, and comb-shaped plates with teeth bent alternately in the opposite directions.

A process of forming the cover layer on the entire surfaces of the electroconductive member will now be described.

The cover layer may be formed on the surfaces of a substrate by a wet process. Zirconia balls are placed into a system containing mixed powder of ZnO, Mn₂O₃, and CO₃O₄, a binder, and isopropyl alcohol, and the system is subjected to bead mill dispersion for a predetermined time at a predetermined circulation rate. The substrate is then dipped into the resulting slurry, pulled out, dried, fired at 1000°C in an electric furnace, and then quenched to form cover layer on the entire surfaces of the substrate.

### (Cell stack)

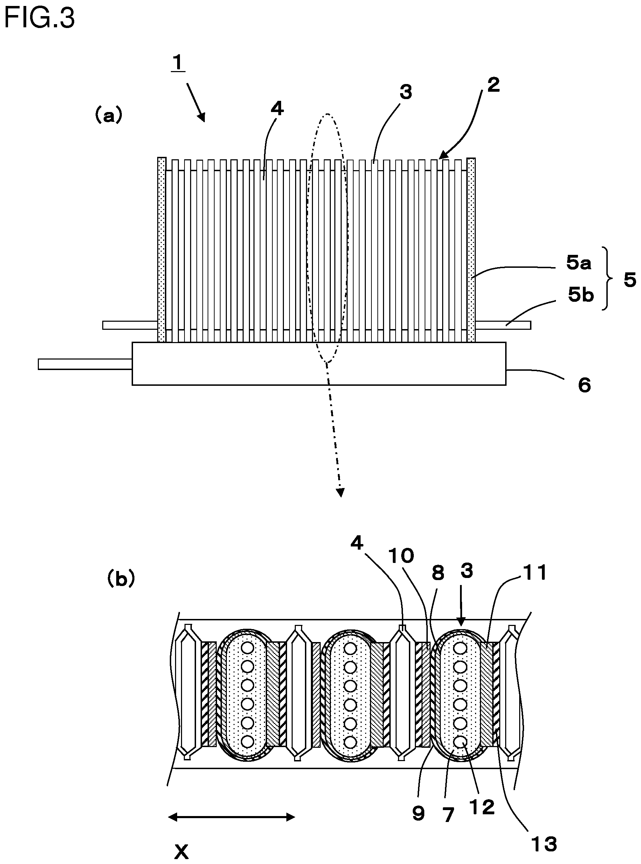

The cell stack provided with the electroconductive member 4 will now be described with reference to Figure 3. The cell stack device 1 includes SOFCs 3. Each SOFC 3 has internal gas flow channels 12 and includes a substantially columnar conductive support 7 having a pair of opposite main faces. One of the main faces of the conductive support 7 is provided with a power generator including an inner or fuel electrode layer 8, a solid electrolyte layer 9, and an outer or air electrode layer 10 in this order. The other main face of the conductive support 7 is provided with an interconnection layer 11. The SOFC 3 with a columnar or thin hollow plate shape includes the conductive support 7 and relevant layers.

The cell stack 2 includes an array of SOFCs 3 disposed in series and electroconductive members 4 disposed between adjacent SOFCs 3. The SOFC 3 are thereby electrically connected in series.

Each SOFC 3 and each electroconductive member 4 are connected with a conductive connector 13. The SOFCs 3 are accordingly in electrical and mechanical connection with each other through electroconductive members 4.

The interconnection layer 11 may be provided with a p-type semiconductor layer (not shown in the drawing) on its outer face. The electroconductive member 4 is connected to the interconnection layer 11 through the p-type semiconductor layer. This ohmic contact can reduce the potential drop. The p-type semiconductor layer may be provided on the outer face of the air electrode layer 10.

The bottom of each SOFC 3 is fixed to a manifold 6 with, for example, a glass sealant (not shown). The fuel gas in the manifold 6 is supplied to the fuel electrode layers 8 of the SOFCs 3 through the gas flow channels 12 in the SOFCs 3.

In the cell stack device 1 shown in Figure 3, fuel gas or hydrogen-containing gas flows through the gas flow channels 12 in the SOFCs 3 while air or oxygen-containing gas flows through the exterior of SOFCs 3 especially through internal spaces of the electroconductive members 4 in the SOFCs 3. The SOFCs 3 thereby generate electricity. The fuel electrode layer 8 is supplied with a fuel gas through the manifold 6 while the air layer 10 with an oxygen-containing gas. The cell 3 thereby generates electricity.

The cell stack device 1 includes two elastically deformable conductive clamps 5 at both ends of the array of SOFCs 3 in the direction x to clamp the cell stack 2 through electroconductive members 4. The bottom end of each clamp 5 is fixed to the manifold 6. Each clamp 5 include a vertical plate 5a along the cell stack 2 and an current extractor 5b outwardly extending in the direction x of the array of SOFCs 3. The current extractor 5b extracts electric current generated in the cell stack 2 (SOFCs 3). The clamps 5 and the manifold 6 may each provided with a cover layer.

Individual components of the SOFCs 3 in Figure 3 will now be described.

The fuel electrode layer 8 may be composed of any known material. Examples of such material include porous conductive ceramics, such as a combination of ZrO₂ containing a dissolved rare earth oxide (referred to as stabilized zirconia) and elemental nickel and/or nickel oxide.

The solid electrolyte layer 9 should have the following two functions: facilitating transfers electrons between the anode and cathode; blocking leaking fuel gas and oxygen-containing gas. An exemplary material for the solid electrolyte layer 9 is ZrO₂ containing 3 to 15 mol% dissolved rare earth metal (oxide of a rare earth metal). It should be appreciated that any other material having such functions may also be used.

Any material commonly used for the air electrode layer 10 may be used in the embodiment without restriction. Typical examples of such materials are conductive ceramics composed of so called ABO₃ perovskite complex oxides. The air electrode layer 10 should have gas permeability, and thus has an open porosity of 20% or more, in particular in the range of 30% to 50%. The air electrode layer 10 may be composed of, for example, at least one of lanthanum manganite (LaSrMnO₃), lanthanum ferrite (LaSrFeO₃), and lanthanum cobaltite (LaSrCoO₃) that contain Mn, Fe, and Co, respectively, in the B site.

The interconnection layer 11 may be made of conductive ceramics that come into contact with the fuel gas (hydrogen containing gas) and oxygen containing gas (air) and thus should have reduction and oxidation resistance. Lanthanum chromite (LaCrO₃) may be used as a conductive ceramic. The interconnection layer 11 should be dense to block leakage of fuel gas flowing through a plurality of gas flow channel 12 in the conductive support 7 and oxygen containing gas flowing outside of the conductive support 7. The interconnection layer 11 thus may have a relative density of 93% or more, in particular 95% or more.

The conductive support 7 should have gas permeability to transfer the fuel gas to the fuel electrode layer 8 and electroconductivity to collect electricity through the interconnection layer 11. Examples of the material having such characteristics suitable for the conductive support 7 include electroconductive ceramics and cermet.

In the case of production of the conductive support 7 through simultaneous firing with the fuel electrode layer 8 or solid electrolyte layer 9 for manufacturing the SOFCs 3, the conductive support 7 may be formed of an iron group metal and a specific rare earth element oxide . The conductive support 7 may have an open porosity of 30% or more in particular in the range of 35% to 50% suitable for gas permeability, and an electroconductivity of 50 S/cm or more, 300 S/cm or more, or 440 S/cm or more.

The p-type semiconductor layer (not shown) may be composed of perovskite oxide of a transition metal. Preferred perovskite oxides have electroconductivity higher than that of lanthanum chromite of the interconnection layer 11 For example, the p-type semiconductor layer may be composed of at least one selected from lanthanum manganite (LaSrMnO₃), lanthanum ferrite (LaSrFeO₃), and lanthanum cobaltite (LaSrCoO₃), which contain Mn, Fe, Co, respectively, in the B site. Preferably, the p-type semiconductor layer has a thickness in the range of 30 µm to 100 µm.

The conductive connector 13, which connects the SOFCs 3 with the electroconductive members 4, may be composed of an electroconductive ceramic. The material for the electroconductive ceramic may be the material for the air electrode layer 10. A higher bonding strength is thereby achieved between the air electrode layer 10 and the conductive connector 13.

Examples of usable electroconductive ceramic include LaSrCoFeO₃, LaSrMnO₃, and LaSrCoO₃. The materials may be used alone or in combination for production of the conductive connector 13.

The conductive connector 13 may be made of two or more materials having different particle sizes or having the same particle size. Alternatively, the conductive connector may be made of materials having the same composition but different particle sizes. In the case of use of different particle sizes, the finer particles may have a size in the range of 0.1 µm to 0.5 µm while the coarser particles may have a size in the range of 1.0 µm to 3.0 µm. In the case of a conductive connector 13 made of materials having the same particle size, the particle size may range from 0.5 µm to 3 µm.

In the conductive connector 13 prepared from materials having different particle sizes, the coarser particles contributes to an improvement in strength of the conductive connector 13 while the finer particles contributes to an improvement in sintering characteristics of the conductive connector 13.

### (Cell module)

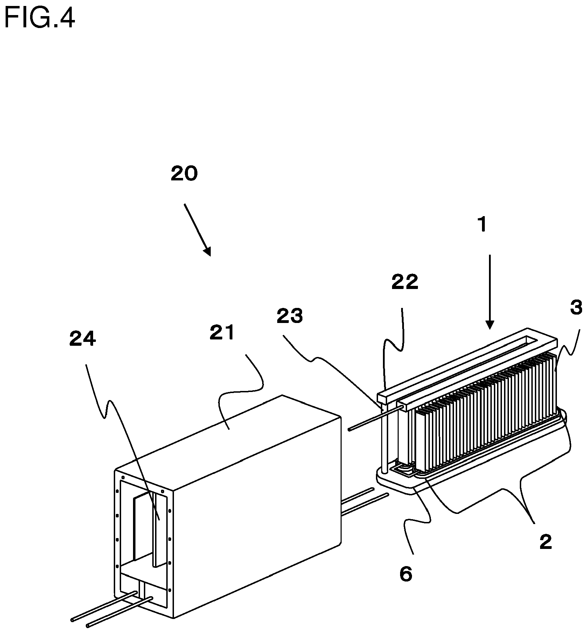

The cell module 20 including a container 21 accommodating a cell stack device 1 will now be described with reference to Figure 4.

The cell module 20 shown in Figure 4 is provided with a reformer 22 disposed above the cell stack 2. The reformer 22 reforms original fuel such as natural gas or heating oil into fuel gas to be consumed in the SOFCs 3. The fuel gas generated in the reformer 22 is fed through a gas pipe 23 to a manifold 6 and then the gas flow channel 12 provided inside the SOFCs 3.

Figure 4 illustrates the state of the container 21 from which the front and back panels are detached and from which the cell stack device 1 and the reformer 22 are drawn toward the back. The cell stack device 1 can be slid into the container 21 in the cell module shown in Figure 4.

The container 21 is provided with an oxygen-containing gas introducer 24 that is disposed between two suites of cell stacks 2 on the manifold 6 in Figure 4. The oxygen-containing gas introducer 24 feeds oxygen-containing gas to the bottoms of the SOFCs 3 such that the oxygen-containing gas flows from the bottoms to the tops on the sides of the SOFCs 3 in cooperation with the flow of the fuel gas. Excess fuel gas (fuel off gas) discharged from the gas flow channel 12 in the SOFCs 3 without being used electricity generation is burnt above the SOFCs 3 to heat the cell stack 2 effectively and thus to facilitate the starting up of the cell stack device 1. The reformer 22 disposed above the cell stack 2 can also be heated; hence, the reformer 22 can effectively reform the fuel gas.

### (Cell module storage device)

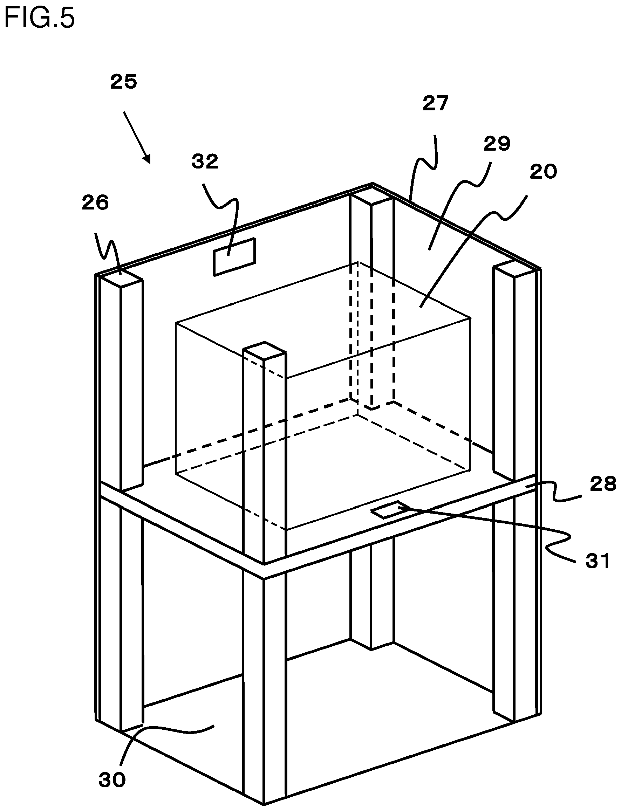

With reference to Figure 5, the cell module device 25 will now be described that includes an exterior case accommodating the cell module 20 and accessories (not shown) to drive the cell module20.

The cell module storage device 25 includes the exterior case consisting of poles 26 and face panels 27 and further includes a partition panel 28 dividing the exterior case into two compartments in the vertical direction. The upper compartment above the partition panel 28 serves as a cell module chamber 29 accommodating the cell module 20 and the lower compartment serves as an accessary chamber 30 accommodating accessories. The accessories in the accessory chamber 30 are not depicted.

The partition panel 28 is provided with an ventilation hole 31 to circulate the air in the accessory chamber 30 to the cell module chamber 29, and one of the face panels 27 of the cell module chamber 29 has a ventilation hole 32 to discharge the air in the cell module chamber 29.

The present disclosure has been described in detail. The disclosure should not be limited to the embodiments described above, and various modifications and variations can be made without deviating from the scope of the disclosure.

In the embodiment described above, the electroconductive member 4 of the cell stack device 1 is described as the electroconductive member of the present disclosure. The disclosed electroconductive member however is not limited to use in fuel cells, but also is used in applications at high-temperature oxidizing atmospheres, such as electroconductive members for oxygen sensors. Although hollow flat-plate vertical SOFCs 3 are used in the above embodiments, hollo flat-plate horizontal SOFCs, cylindrical SOFCs, and flat-plate fuel cells can also be used.

In the above embodiment, the SOFC, the cell module, and the cell module storage device are described. The disclosure however should not be limited to the description. For example, the disclosure may be applied to electrolytic SOFCs that electrolyze water vapor by voltage into hydrogen (H₂) and oxygen (O₂) and electrolytic cell modules and electrolytic apparatuses provided with the electrolytic SOFCs.

### Examples

### <Example 1>

### (Preparation)

As show in Table 1, six electroconductive members having cover layers having different zirconium contents were prepared.

In detail, 15 g of Zn(Co_{0.5}Mn_{0.5})₂O₄ microparticulate material (raw material) containing 30 ppm of zirconium oxide was dispersed in 50ml of isopropyl alcohol by bead mill circulation at a predetermined peripheral velocity for a predetermined time shown in Table 1 with zirconia balls. Hydroxylpropyl cellulose was added as a binder to form slurry.

A coating film was formed at room temperature with a dip coater DC4200 available from Aiden Co. Ltd. A suspended ferrite stainless steel substrate was dipped into the slurry, and pulled out at a pulling rate of 36 mm/s to form a precursor of the cover layer. The resulting precursor of the cover layer was completely dried for about 600 seconds (complete drying time) in open air (at 25°C and 62%RH).

The completely dried electroconductive member was re-dipped five times in total under the same conditions.

After the dipping, the electroconductive member was dried in a thermostatic oven adjusted at 50°C. The dried electroconductive member was fired for 2 hours at 1000°C in an electric furnace and then quenched to give an electroconductive member having a coating film for testing.

### (Testing method)

The electroconductive member provided with the cover layer was bonded to an air electrode material and was fired for two hours at a temperature of 1000°C to 1150°C in air. A platinum mesh collector was attached to the fired electroconductive member to give a SOFC for testing.

A DC current of 0.24 A/cm² was continuously supplied to two electrodes of the SOFC kept at a constant temperature in air as a simulative operation of the SOFC to monitor the electric resistance.

The observed electric resistance is the sum of the resistances of the electroconductive member itself, the air electrode material, and platinum mesh collector.

| Sample | Zirconium oxide (ppm) in raw material | Peripheral velocity (m/s) of bead mill circulation | Time (min) of bead mill circulation | Zirconium oxide (ppm) in cover layer | Electric resistance (mΩ) |
|---|---|---|---|---|---|
| 1 | 30 | 18 | 1060 | 6000 | 36.7 |
| 2 | 30 | 18 | 860 | 5000 | 35.4 |
| 3 | 30 | 18 | 670 | 4000 | 32.7 |
| 4 | 30 | 18 | 400 | 2500 | 30.3 |
| 5 | 30 | 13 | 190 | 1100 | 26.9 |
| 6 | 30 | 9 | 140 | 460 | 22.8 |

### (Results)

Sample 1 having a zirconium oxide content higher than 5000 ppm has an electric resistance of 36.7 mΩ. In contrast, Sample 2 having a zirconium oxide content of 5000 ppm has an electric resistance of 35.4 mΩ. These results indicate that a zirconium oxide content of 5000 ppm or less can reduce the electric resistance. Sample 4 having a zirconium oxide content of 2500 ppm has an electric resistance of 30.3 mΩ and Sample 6 having a zirconium oxide content less than 500 ppm has an electric resistance of 22.8 mΩ, indicating further reductions in electric resistance.

### <Example 2>

### (Preparation)

As shown in Table 2, four electroconductive members were prepared. These electroconductive members had cover layers having different rates (%) of the area having a sensitivity of at least 1.25 counts in semiquantitative mapping of zirconium with an electron probe microanalyzer (EPMA).

In detail, 15 g of Zn(Co_{0.5}Mn_{0.5})₂O₄ microparticulate materials having different zirconium contents were dispersed in 50 ml isopropyl alcohol by bead mill circulation using zirconia balls for a predetermined time at a predetermined circulation rate. Table 2 shows the zirconium contents in the Zn(Co_{0.5}Mn_{0.5})₂O₄ microparticulate materials and the circulation rate and time of the bead mill circulation on these samples. Other conditions on the preparation were the same as those in Example 1.

Although the reason for preparation of electroconductive members having different rates of the area having a sensitivity of at least 1.25 counts in the semiquantitative mapping of zirconium with EPMA is not clear, it is inferred that the state of dispersion of zirconium contained in the Zn(Co_{0.5}Mn_{0.5})₂O₄ microparticulate material affects.

### (Measurement)

The semiquantitative mapping of zirconium in the EPMA was performed with an X-ray microanalyzer JXA-8530F (JEOL). The accelerated voltage was 15.0 kV, the irradiation current was 1×10⁻⁷ A, the rotation was 1.1, the time was 10 ms, the observed area was 5 µm (x-axis) by 24 µm (y-axis), and the interval was 0.0938 µm (x-axis) by 0.0938 µm (y-axis).

| Sample | Zirconium oxide (ppm) in raw material | Periphera l velocity (m/s) of bead mill circulation | Time (min) of bead mill circulation | Zirconium oxide (ppm) in cover layer | Area (%) of at least 1.25 counts | Electric resistance (mΩ) |
|---|---|---|---|---|---|---|
| 1 | 1530 | 18 | 400 | 4000 | 0.19 | 32.7 |
| 2 | 2900 | 13 | 190 | 4000 | 0.25 | 29.1 |
| 3 | 1610 | 18 | 390 | 4000 | 0.32 | 27.4 |
| 4 | 3910 | 9 | 150 | 4000 | 0.4 | 26.6 |

### (Results)

Sample 1 with an area percent of 0.19 on at least 1.25 counts has an electric resistance of 32.7 mΩ whereas Sample 2 with an area percent of 0.25 on at least 1.25 counts has an electric resistance of 29.1 mΩ. The comparison demonstrates that an area percent of 0.25 or more on at least 1.25 counts can reduce the electric resistance. Sample 4 with an area percent of 0.4 on at least 1.25 counts has an electric resistance of 26.6 mΩ, indicating a further reduction in electric resistance.

### [Reference Numeral]

1: cell stack device
2: cell stack
3: SOFC
4: electroconductive member
41: substrate
43: cover layer
6: manifold
13: conductive connector
20: cell module
21: container
25: cell module storage device

## Claims

1. An electroconductive member comprising:
a substrate; and
a cover layer covering the surfaces of the substrate, the cover layer containing zinc, manganese, and cobalt,
wherein the cover layer has a zirconium content of 5000 ppm or less on an oxide basis.

2. The electroconductive member of claim 1, wherein the zirconium content is 500 ppm or less on the oxide basis.

3. The electroconductive member of claim 1 or 2, wherein the cover layer has areas having a sensitivity of at least 1.25 counts occupying 0.25% or more of a 120-µm² observed region selected at random in semiquantitative zirconium mapping with an electron probe microanalyzer (EPMA).

4. A cell stack comprising a plurality of SOFCs that are electrically connected with the electroconductive member of any one of claims 1 to 3.

5. A cell module comprising a container accommodating the cell stack of claim 4.

6. A cell module storage device comprising:
an exterior case;
the cell module of claim 5; and
an accessary to operate the cell module,
wherein the cell module and the accessary are accommodated in the exterior case.
